# EUROPEAN PATENT APPLICATION

(11) **EP 4 167 621 A1**
(43) Date of publication of application: **19.04.2023**
(21) Application number: 21822638.9
(22) Date of filing: 01.06.2021
(51) Int. Cl.: H04W 24/02, H04L 12/70

(54) **VIRTUALIZED RESOURCE DEPLOYMENT DEVICE, VIRTUALIZED RESOURCE DEPLOYMENT METHOD, AND NON-TRANSITORY COMPUTER-READABLE MEDIUM**

(30) Priority: 12.06.2020 JP 2020102204
(71) Applicant: NEC Corporation, 108-8001 Tokyo (JP)
(72) Inventor: YOSHIKAWA, Naoya, Tokyo 108-8001 (JP)
(74) Representative: Betten & Resch
(86) International application number: PCT/JP2021/020851
(87) International publication number: WO 2021/251212

(57) **Abstract**

Provided are a virtualized resource allocation device, a virtualized resource allocation method, and a program that are capable of appropriately allocating a virtualized resource. A virtualized resource allocation device (10) includes an acquisition unit (11) configured to acquire a sector density of a sector to be used by a virtual base station, a determination unit (12) configured to determine a virtualized resource allocation model, based on the sector density acquired by the acquisition unit (11), and an allocation unit (13) configured to allocate a virtualized resource for the virtual base station, based on the virtualized resource allocation model determined by the determination unit (12).

## Description

### Technical Field

The present invention relates to a virtualized resource allocation device, a virtualized resource allocation method, and a non-transitory computer-readable medium.

### Background Art

In recent years, for a next-generation radio communication system, a base station system of a centralized-radio access network (C-RAN) configuration in which a central unit (CU) controls a plurality of distributed units (DUs) has been developed. In particular, since 5G requires establishment of a network that satisfies requirements of various services, studies have been made on base station virtualization that achieves functions of a base station more flexibly and efficiently by software on a physical machine such as a general-purpose server.

As related techniques, for example, Patent Literatures 1 and 2 are known. Patent Literature 1 describes that, in a server selection system of a virtual equipment system, a virtual machine that operates on a hypervisor of a physical machine, a container-type virtual server having a smaller virtualization overhead, or a bare metal server that does not perform virtualization is selected based on performance requirements and functional requirements. Patent Literature 2 describes that, in a C-RAN communication system, a virtual machine is regenerated based on data transfer delay time between a wireless unit and a virtual machine, and signal processing performance of the virtual machine.

### Citation List

### Patent Literature

[Patent Literature 1] Japanese Patent No. 6291134
[Patent Literature 2] Japanese Unexamined Patent Application Publication No. 2018-125573

### Summary of Invention

### Technical Problem

As described above, the related techniques enable selection of a server on the basis of performance requirements and the like, or generation of a virtual machine on the basis of a delay time and the like. However, in the related techniques, there is a problem that it is difficult to appropriately allocate virtualized resources in base station virtualization.

In view of the problem described above, an object of the present disclosure is to provide a virtualized resource allocation device, a virtualized resource allocation method, and a non-transitory computer-readable medium that are capable of appropriately allocating virtualized resources.

### Solution to Problem

A virtualized resource allocation device according to the present disclosure includes: an acquisition unit configured to acquire a sector density of a sector to be used by a virtual base station; a determination unit configured to determine a virtualized resource allocation model, based on the acquired sector density; and an allocation unit configured to allocate a virtualized resource for the virtual base station, based on the determined virtualized resource allocation model.

A virtualized resource allocation method according to the present disclosure includes: acquiring a sector density of a sector to be used by a virtual base station; determining a virtualized resource allocation model, based on the acquired sector density; and allocating a virtualized resource for the virtual base station, based on the determined virtualized resource allocation model.

A non-transitory computer-readable medium storing a program according to the present disclosure, the program causing a computer to execute processing of: acquiring a sector density of a sector to be used by a virtual base station; determining a virtualized resource allocation model, based on the acquired sector density; and allocating a virtualized resource for the virtual base station, based on the determined virtualized resource allocation model.

### Advantageous Effects of Invention

According to the present disclosure, a virtualized resource allocation device, a virtualized resource allocation method, and a non-transitory computer-readable medium that are capable of appropriately allocating virtualized resources can be provided.

### Brief Description of Drawings

Fig. 1 is a configuration diagram illustrating an outline of a virtualized resource allocation device according to an example embodiment;
Fig. 2 is a configuration diagram illustrating a configuration example of a RAN system according to the first example embodiment;
Fig. 3 is a configuration diagram illustrating a configuration example of a base station virtualized resource allocation device according to the first example embodiment;
Fig. 4 is a diagram illustrating a specific example of a logic table according to the first example embodiment;
Fig. 5 is a diagram for describing an outline of a hyper converged cluster model according to the first example embodiment;
Fig. 6 is a diagram for describing an outline of a distributed cluster model according to the first example embodiment; and
Fig. 7 is a flowchart illustrating an operation example of the RAN system according to the first example embodiment.

### Example Embodiment

### (Summary of Example Embodiment)

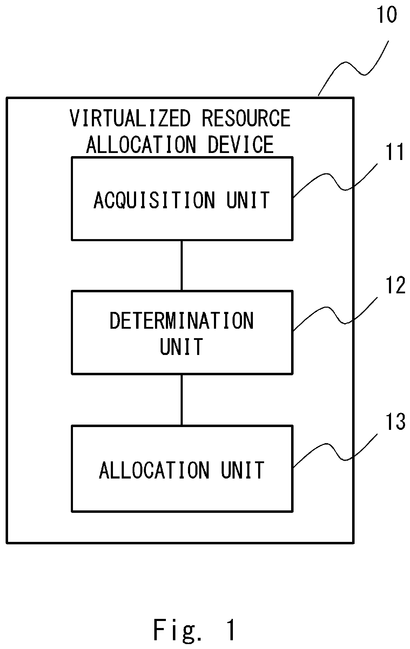

Fig. 1 illustrates an outline of a virtualized resource allocation device according to an example embodiment. As illustrated in Fig. 1, the virtualized resource allocation device 10 according to the example embodiment includes an acquisition unit 11, a determination unit 12, and an allocation unit 13.

The acquisition unit 11 acquires the sector density of a sector used by a virtual base station. The determination unit 12 determines a virtualized resource allocation model, based on the sector density acquired by the acquisition unit 11. The allocation unit 13 allocates a virtualized resource for the virtual base station by the virtualized resource allocation model determined by the determination unit 12.

In a related virtualized resource scheduling technology prior to the application of the present example embodiment, since a sector density is not taken into account when finding the virtualized resource allocation model (bare metal model, hyper converged cluster model, distributed cluster model, and the like), the virtualized resource allocation model cannot be found and provisioned (allocated) according to the sector density (and latency). That is, in the related technology, it is assumed that a configuration of a certain size including a cloud controller is being allocated regardless of the density of a RAN to be actually established and the necessary processing capability thereof, and therefore, there is a problem that resources and accommodation space cannot be fully effectively utilized.

Therefore, in the present example embodiment, by determining the virtualized resource allocation model, based on the sector density, virtualized resources are able to be appropriately allocated, thus enabling effective utilization of the resources in a use case of base station virtualization.

### (First Example Embodiment)

Hereinafter, a first example embodiment will be described with reference to the drawings. The present example embodiment solves the problem relating to resource allocation that occurs when a base station function is virtualized by using the related technology. In particular, function of a baseband unit (BBU) is divided into a virtualized distributed unit (vDU) and a virtualized central unit (vCU) by virtualization technologies, and extremely sensitive latency requirements are required for the vDU. It is difficult for a related virtualized resource orchestration technology to satisfy the requirements for the vDU, and the present example embodiment provides a solution capable of solving such a problem.

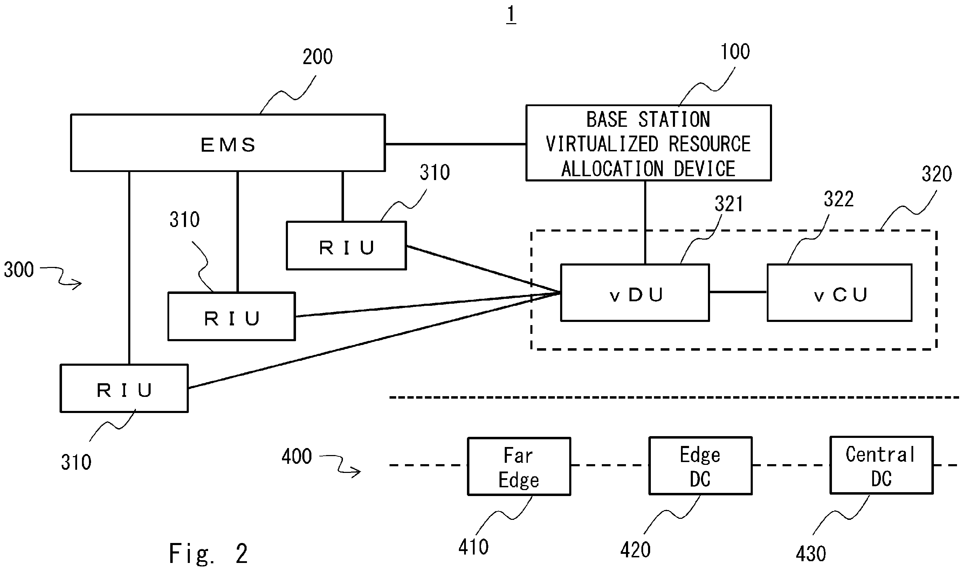

Fig. 2 illustrates a configuration example of a RAN system according to the present example embodiment. As illustrated in Fig. 2, a RAN system 1 according to the present example embodiment includes a base station virtualized resource allocation device 100, an element management system (EMS) 200, and a virtual radio access network (vRAN) 300. The vRAN 300 includes a plurality of radio interface units (RIUs) 310 and a virtual base station (virtualized baseband unit (vBBU)) 320. The virtual base station 320 includes a vDU 321 and a vCU 322.

The base station virtualized resource allocation device 100 allocates (provisions) a virtualized resource necessary for the virtual base station 320. The base station virtualized resource allocation device 100 acquires a sector density from the EMS 200, measures a latency (transmission delay), determines a virtualized resource allocation model, based on the sector density and the latency, and allocates the virtualized resource. Note that, a sector is a unit acquired by dividing the range of a cell of the base station for each antenna, and the sector density is the number of sectors (number of antennas) per (virtual) base station. In the present example embodiment, the number of antennas of the RIU 310 managed by the EMS 200 is used as a sector density when determining the virtualized resource allocation model of the virtual base station.

The EMS 200 is a management device that manages network units such as the RIU 310. When receiving an antenna addition notification from the RIU 310, the EMS 200 notifies the base station virtualized resource allocation device 100 of the information (sector density) of the added new antenna.

The RIU 310 is a wireless device (antenna unit) of the virtual base station, and is an interface for installing an antenna. When an available antenna (sector) changes, for example, when a power supply is turned on, when an antenna is added, or the like, the RIU 310 (or a radio interface manager (RIM)) notifies the EMS 200 of such event.

The vDU 321 is a radio signal processing unit of the virtual base station, and controls radio signals (beams) of a plurality of the RIUs 310 (antenna units) being accommodated. The vCU 322 is a data processing unit of the virtual base station, and controls data transmission/reception via a plurality of the vDUs 321 being accommodated. The vDU 321 and the vCU 322 are implemented (achieved) by virtualized resources (virtual machines and the like) virtualized on an implementation platform 400.

The implementation platform 400 includes a far edge 410, an edge data center (DC) 420, and a central DC 430. Each of the far edge 410, the edge DC 420, and the central DC 430 is a computer system including any number of computers (physical servers and the like).

The far edge 410 is a computer system located further on a user side (antenna site) than an edge of a network (mobile network including a RAN and a core network), and is communicably connected to the RIU 310. The edge DC 420 is a data center located at the edge (local site) of the network, and is communicably connected between the far edge 410 and central DC 430. The central DC 430 is a data center located at the central side (central site) of the network, and is communicatively connected to the core network.

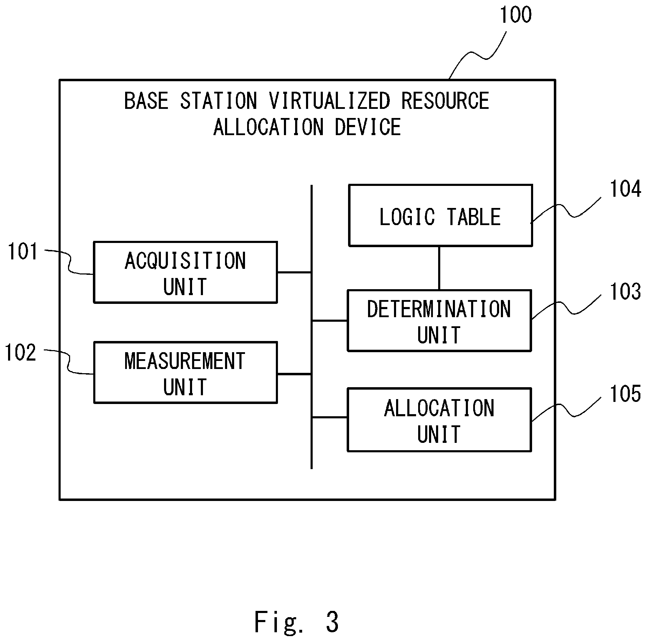

Fig. 3 illustrates a configuration example of the base station virtualized resource allocation device according to the present example embodiment. As illustrated in Fig. 3, the base station virtualized resource allocation device 100 according to the present example embodiment includes an acquisition unit 101, a measurement unit 102, a determination unit 103, a logic table 104, and an allocation unit 105.

The acquisition unit 101 acquires a sector density, which is antenna information of the RIU 310, from the EMS 200 that manages the RIU 310. For example, when an antenna is added to the RIU 310, a sector density including the new antenna is acquired from the EMS 200. Only information (the number of antennas) of the added new antenna may be acquired, or information of usable antennas including the new antenna may be acquired.

The measurement unit 102 measures the latency of the implementation platform 400 that implements the virtual base station 320. Specifically, the measurement unit 102 measures the latency between the edge DC 420 and central DC 430. For example, the latency is measured by using an agent function of the base station virtualized resource allocation device 100. Note that the measurement unit 102 may acquire a latency measured by another device.

The determination unit 103 refers to the logic table 104 and determines a virtualized resource allocation model (and a resource allocation location), based on the sector density and the latency. Note that, as long as the virtualized resource allocation model is able to be determined by the same logic as the logic table 104, other methods may be used instead of the logic table 104.

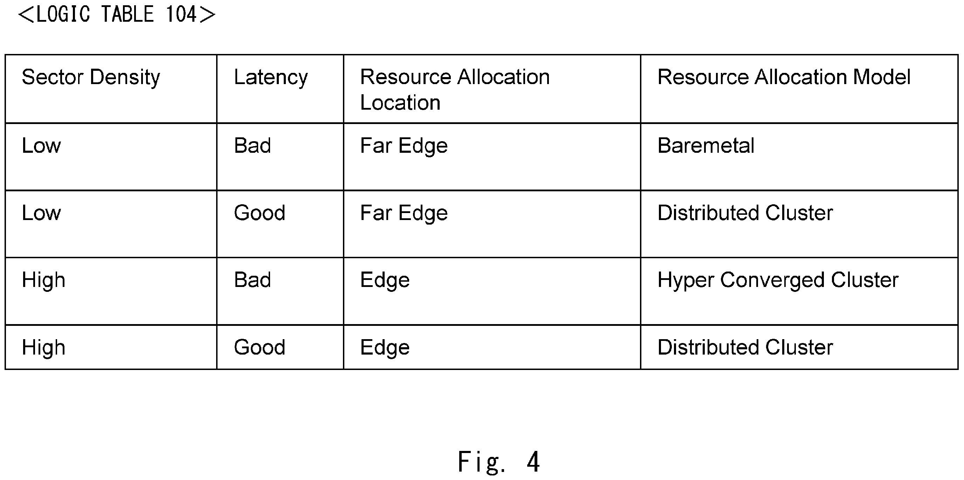

Fig. 4 illustrates a specific example of the logic table 104. As illustrated in Fig. 4, the logic table (logic storage unit) 104 associates sector density and latency with a resource allocation model. In this example, the logic table 104 associates sector density and latency with a resource allocation location and a resource allocation model. For example, the sector density includes Low/High, the latency includes Bad/Good, and the resource allocation location includes Far edge/Edge (Edge DC). The sector density and the latency may be further divided into a plurality of levels, and the resource allocation location may further include a plurality of locations (central DC and the like).

The resource allocation model includes, for example, a bare metal model, a hyper converged cluster model, and a distributed cluster model. The resource allocation model may include any one of these models, or may further include other models. For example, a bare metal model and a virtualized cluster model may be adopted. The bare metal model is a model for provisioning a physical machine (physical server and the like) in a resource allocation location with a function necessary for the vDU 321.

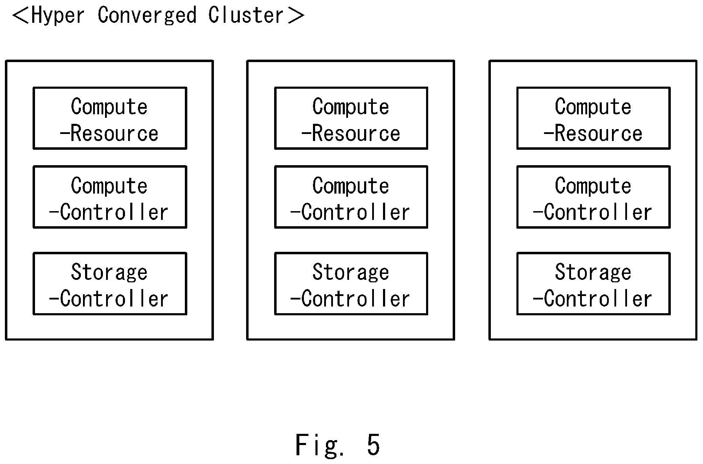

Fig. 5 illustrates a provisioning image of a hyper converged cluster model. As illustrated in Fig. 5, in the hyper converged cluster model, cloud controllers (compute controllers and storage controllers) and compute resources are provisioned together for individual virtual machines (nodes) in resource allocation locations. The hyper converged cluster model is suitable for mobile edge computing (MEC) in non-ideal latency regions. In the hyper converged cluster model, deployment is made to an extremely small stand-alone connected to an edge-service, therefore footprint is moderate, and operation is enabled even in an environment where the latency is bad.

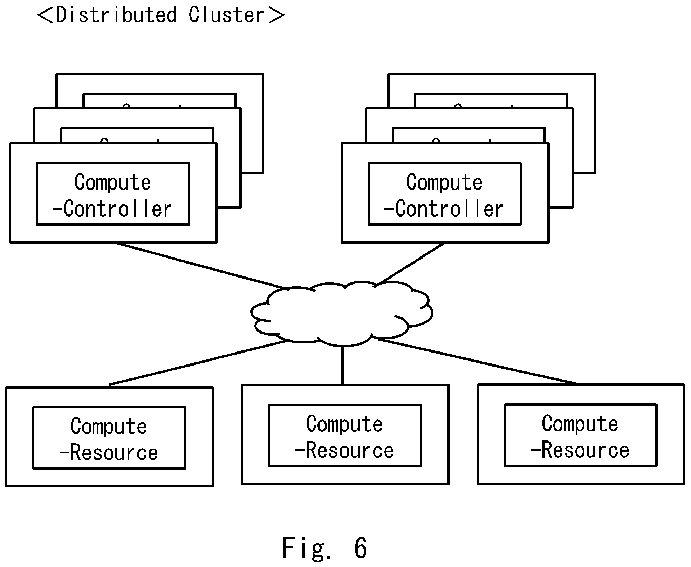

Fig. 6 illustrates a provisioning image of a distributed cluster model. As illustrated in Fig. 6, in the distributed cluster model, cloud controllers (compute controllers) and compute resources are distributed and provisioned to a plurality of virtual machines (nodes) in resource allocation locations. The distributed cluster model is suitable for MECs in ideal latency regions. In the distributed cluster model, since only resource nodes are deployed to a remote site, footprint is minimum, but a sensitive latency between sites is required, and the latency between sites needs to be good.

The allocation unit 105 provisions the virtualized resource of the vDU 321 by using the determined virtualized resource allocation model. Note that not only the vDU 321 but also a virtualized resource of the vCU 322 may be provisioned by the same method.

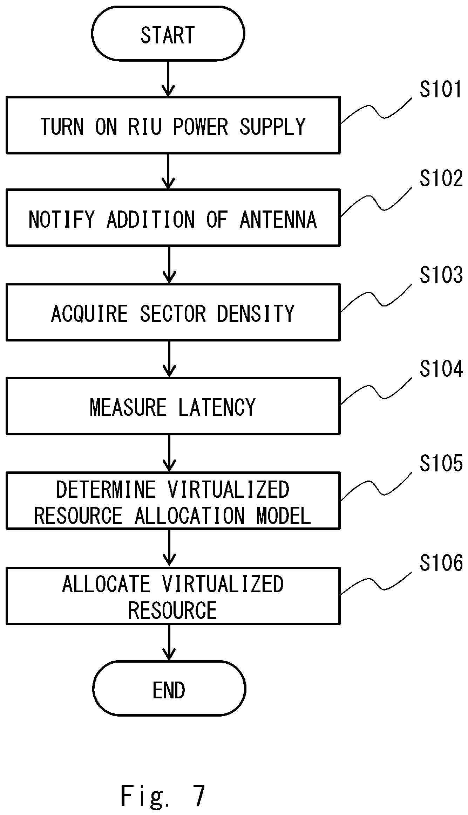

Fig. 7 illustrates an operation example (virtualized resource allocation method) of the RAN system according to the present example embodiment. As illustrated in Fig. 7, when a power supply is turned on, the RIU 310 (or RIM) notifies the EMS 200 that the power supply is on (S101). Next, when an antenna is added, the RIU 310 notifies the EMS 200 of the addition of the antenna, and the EMS 200 further notifies the base station virtualized resource allocation device 100 of the addition of the antenna (new antenna facility) (S102).

Next, the base station virtualized resource allocation device 100 acquires, from the EMS 200, information on the sector density necessary for finding the virtualized resource allocation model (S103). The sector density may be acquired when the antenna is added, or may be acquired at any timing (when the antenna is added or reduced, when the RIU power supply is turned on or off, when an antenna failure occurs, at regular intervals, or the like). Further, the base station virtualized resource allocation device 100 measures the latency between the edge DC 420 and the central DC 430 by using its own agent function (S104). The latency may be measured when the sector density is acquired, or may be measured at any timing (when a configuration is changed, when a failure occurs, at regular intervals, or the like).

Next, the base station virtualized resource allocation device 100 determines the virtualized resource allocation model according to the logic table 104, based on the collected sector density and latency information (S105). For example, when the number of sectors (sector density) is equal to or smaller than a first threshold value (for example, several numbers of sectors), the sector density is found to be low, and when the number of sectors is larger than the first threshold value, the sector density is found to be high. When round trip time between the edge DC 420 and the central DC 430 is equal to or smaller than a second threshold value (for example, 100 msec), the latency is found to be good, and when the round trip time is larger than the second threshold value, the latency is found to be bad.

In the example of the logic table 104 of Fig. 4, when the sector density is low, the bare metal model or the distributed cluster model is selected in the far edge location. In particular, when the sector density is low and the latency is bad, the bare metal model is selected, and when the sector density is low and the latency is good, the distributed cluster model is selected. Further, when the sector density is high, the hyper converged cluster model or the distributed cluster model is selected in the edge location. In particular, when the sector density is high and the latency is bad, the hyper converged cluster model is selected, and when the sector density is high and the latency is good, the distributed cluster model is selected.

Next, the base station virtualized resource allocation device 100 actually allocates (provisions) the virtualized resource of the vDU 321 according to the determined virtualized resource allocation model (S106). For example, in a case of using the bare metal model, a bare metal provisioning function for installing an operating system (OS) is used for a (far edge) physical server. In a case of using the hyper converged cluster model, a cloud controller is allocated at the edge in full stack, and a compute resource is scaled. In a case of using the distributed cluster model, management functions of cloud controllers are centralized, and only compute resources are allocated to edges (or far edges) to maximize resource utilization efficiency and aggregation efficiency.

In the hyper converged cluster model and the distributed cluster model, it is assumed that a certain number of cells are accommodated and managed, but in an area with a low sector density (for example, only a few sectors in a cell) such as a rural area, only a minimum of vDU/vCU is required. Therefore, when the sector density is low, by provisioning with a bare metal configuration that does not require the cloud controlling functions required for hyper converged cluster or distributed cluster, resource accommodating efficiency thereof may be further maximized. As described above, by considering not only the latency but also the sector density (the number of sectors), a resource allocation model that takes into account the accommodation efficiency may be selected, thereby enabling flexible configuration change and development of an optimal resource allocation model even when a short-to-medium-term configuration change occurs.

Further, since the sector density is a dynamic value that varies to some extent due to addition of antennas, there is a possibility that a resource allocation form that was optimal during the initial antenna operation will fail to be optimal after addition of another antenna. In such temporary event, or in a case in which mid- to long-term systematic processing capacity improvement is required, it is also effective to calculate a dynamically optimal allocation model and reconfigure a resource allocation model. For example, the optimum configuration of the resources may be changed for an event or an addition of an antenna in the rural area where the sector density is extremely low.

As described above, by applying the present example embodiment, resource aggregation effect and flexible allocation, which are the benefits of the virtualization technology, may be used to cope with fine requirements of the base station service by determining the virtualized resource allocation model, based on the sector density and the latency. In particular, edge sites generally tend to be very expensive to build and operate (site costs, new construction costs, various costs for operating a large number of small DCs due to distribution, and the like). Therefore, rather than simply determining the distribution location only in a place where the latency is good, a logic that selects accommodation and location considering the sector density as in the present example embodiment is very important for optimizing the cost.

Note that, the present disclosure is not limited to the above-described example embodiments, and can be modified as appropriate without departing from the scope of the present disclosure.

Each configuration in the above-described example embodiment is configured by hardware and/or software, and may be configured by one hardware or software, or may be configured by a plurality of hardware and/or software. The function (processing) of each device may be achieved by a computer having a CPU, a memory, and the like. For example, a program for performing the method according to the example embodiment may be stored in a storage device, and each function may be achieved by executing the program stored in the storage device by a CPU.

These programs may be stored using various types of non-transitory computer-readable media and supplied to a computer. Non-transitory computer-readable media include various types of tangible storage media. Examples of non-transitory computer-readable media include magnetic recording media (e.g., flexible disk, magnetic tape, hard disk drive), magneto-optical recording media (e.g., magneto-optical disk), CD-read only memory (ROM), CD-R, CD-R/W, and semiconductor memory (e.g., mask ROM, programmable ROM (PROM), erasable PROM (EPROM), flash ROM, random access memory (RAM)). The programs may also be supplied to the computer by various types of transitory computer-readable media. Examples of transitory computer-readable media include electrical signals, optical signals, and electromagnetic waves. The transitory computer-readable medium is able to supply the program to the computer via a wired communication path such as an electric wire and an optical fiber or a wireless communication path.

A part or all of the above-described example embodiments may be described as the following supplementary notes, but are not limited thereto.

### (Supplementary note 1)

A virtualized resource allocation device comprising:
an acquisition unit configured to acquire a sector density of a sector to be used by a virtual base station;
a determination unit configured to determine a virtualized resource allocation model, based on the acquired sector density; and
an allocation unit configured to allocate a virtualized resource for the virtual base station, based on the determined virtualized resource allocation model.

### (Supplementary note 2)

The virtualized resource allocation device according to Supplementary note 1, further comprising a measurement unit configured to measure latency of an implementation platform for implementing the virtual base station,
wherein the determination unit determines the virtualized resource allocation model, based on the measured latency.

### (Supplementary note 3)

The virtualized resource allocation device according to Supplementary note 2, wherein the latency is a delay time between an edge data center and a central data center.

### (Supplementary note 4)

The virtualized resource allocation device according to Supplementary note 2 or 3, wherein the determination unit determines the virtualized resource allocation model, based on a logic table in which the sector density and the latency are associated with the virtualized resource allocation model.

### (Supplementary note 5)

The virtualized resource allocation device according to Supplementary note 4, wherein the logic table associates the sector density and the latency with the virtualized resource allocation model and a virtualized resource allocation location.

### (Supplementary note 6)

The virtualized resource allocation device according to any one of Supplementary notes 1 to 5, wherein the virtualized resource allocation model includes a bare metal model, a hyper converged cluster model, or a distributed cluster model.

### (Supplementary note 7)

The virtualized resource allocation device according to Supplementary note 6, wherein the determination unit selects a bare metal model or a distributed cluster model when the sector density is lower than a first threshold value.

### (Supplementary note 8)

The virtualized resource allocation device according to Supplementary note 7, wherein the determination unit selects a bare metal model when the sector density is lower than the first threshold value and the latency of an implementation platform for implementing the virtual base station is worse than a second threshold value, and selects a distributed cluster model when the sector density is lower than the first threshold value and the latency is better than the second threshold value.

### (Supplementary note 9)

The virtualized resource allocation device according to Supplementary note 7 or 8, wherein the determination unit selects a hyper converged cluster model or a distributed cluster model when the sector density is higher than the first threshold value.

### (Supplementary note 10)

The virtualized resource allocation device according to Supplementary note 9, wherein the determination unit selects a hyper converged cluster model when the sector density is higher than the first threshold value and the latency is worse than the second threshold value, and selects a distributed cluster model when the sector density is higher than the first threshold value and the latency is better than the second threshold value.

### (Supplementary note 11)

The virtualized resource allocation device according to any one of Supplementary notes 1 to 10, wherein the acquisition unit acquires the sector density from an element management system (EMS) that manages a radio interface unit (RIU).

### (Supplementary note 12)

The virtualized resource allocation device according to Supplementary note 11, wherein the acquisition unit acquires the sector density from the EMS when an antenna is added to the RIU.

### (Supplementary note 13)

The virtualized resource allocation device according to any one of Supplementary notes 1 to 12, wherein the allocation unit allocates a virtualized resource of a virtualized distributed unit (vDU) constituting the virtual base station.

### (Supplementary note 14)

A virtualized resource allocation method comprising:
acquiring a sector density of a sector to be used by a virtual base station;
determining a virtualized resource allocation model, based on the acquired sector density; and
allocating a virtualized resource for the virtual base station, based on the determined virtualized resource allocation model.

### (Supplementary note 15)

The virtualized resource allocation method according to Supplementary note 14, further comprising measuring a latency of an implementation platform for implementing the virtual base station,
wherein the determination includes determining the virtualized resource allocation model, based on the measured latency.

### (Supplementary note 16)

A program for causing a computer to execute processing of:
acquiring a sector density of a sector to be used by a virtual base station;
determining a virtualized resource allocation model, based on the acquired sector density, and
allocating a virtualized resource for the virtual base station, based on the determined virtualized resource allocation model.

### (Supplementary note 17)

The program according to Supplementary note 16, further comprising measuring a latency of an implementation platform for implementing the virtual base station,
wherein the determination includes determining the virtualized resource allocation model, based on the measured latency.

While the present invention has been described above with reference to example embodiments thereof, the present invention is not limited to the example embodiments. It will be understood by those of ordinary skill in the art that various changes in form and details may be made in the present invention without departing from the scope of the invention.

This application is based upon and claims the benefit of priority from Japanese Patent Application No. 2020-102204, filed on June 12, 2020, the disclosure of which is incorporated herein in its entirety by reference.

### Reference Signs List

- 1: RAN SYSTEM
- 10: VIRTUALIZED RESOURCE ALLOCATION DEVICE
- 11: ACQUISITION UNIT
- 12: DETERMINATION UNIT
- 13: ALLOCATION UNIT
- 100: BASE STATION VIRTUALIZED RESOURCE ALLOCATION DEVICE
- 101: ACQUISITION UNIT
- 102: MEASUREMENT UNIT
- 103: DETERMINATION UNIT
- 104: LOGIC TABLE
- 105: ALLOCATION UNIT
- 200: EMS
- 300: vRAN
- 310: RIU
- 320: VIRTUAL BASE STATION
- 321: vDU
- 322: vCU
- 400: IMPLEMENTATION PLATFORM
- 410: FAR EDGE
- 420: EDGE DC
- 430: CENTRAL DC

## Claims

1. A virtualized resource allocation device comprising:
acquisition means for acquiring a sector density of a sector to be used by a virtual base station;
determination means for determining a virtualized resource allocation model, based on the acquired sector density; and
allocation means for allocating a virtualized resource for the virtual base station, based on the determined virtualized resource allocation model.

2. The virtualized resource allocation device according to Claim 1, further comprising measurement means for measuring latency of an implementation platform for implementing the virtual base station,
wherein the determination means determines the virtualized resource allocation model, based on the measured latency.

3. The virtualized resource allocation device according to Claim 2, wherein the latency is a delay time between an edge data center and a central data center.

4. The virtualized resource allocation device according to Claim 2 or 3, wherein the determination means determines the virtualized resource allocation model, based on a logic table in which the sector density and the latency are associated with the virtualized resource allocation model.

5. The virtualized resource allocation device according to Claim 4, wherein the logic table associates the sector density and the latency with the virtualized resource allocation model and a virtualized resource allocation location.

6. The virtualized resource allocation device according to any one of Claims 1 to 5, wherein the virtualized resource allocation model includes a bare metal model, a hyper converged cluster model, or a distributed cluster model.

7. The virtualized resource allocation device according to Claim 6, wherein the determination means selects a bare metal model or a distributed cluster model when the sector density is lower than a first threshold value.

8. The virtualized resource allocation device according to Claim 7, wherein the determination means selects a bare metal model when the sector density is lower than the first threshold value and the latency of an implementation platform for implementing the virtual base station is worse than a second threshold value, and selects a distributed cluster model when the sector density is lower than the first threshold value and the latency is better than the second threshold value.

9. The virtualized resource allocation device according to Claim 7 or 8, wherein the determination means selects a hyper converged cluster model or a distributed cluster model when the sector density is higher than the first threshold value.

10. The virtualized resource allocation device according to Claim 8, wherein the determination means selects a hyper converged cluster model when the sector density is higher than the first threshold value and the latency is worse than the second threshold value, and selects a distributed cluster model when the sector density is higher than the first threshold value and the latency is better than the second threshold value.

11. The virtualized resource allocation device according to any one of Claims 1 to 10, wherein the acquisition means acquires the sector density from an element management system (EMS) that manages a radio interface unit (RIU).

12. The virtualized resource allocation device according to Claim 11, wherein the acquisition means acquires the sector density from the EMS when an antenna is added to the RIU.

13. The virtualized resource allocation device according to any one of Claims 1 to 12, wherein the allocation means allocates a virtualized resource of a virtualized distributed unit (vDU) constituting the virtual base station.

14. A virtualized resource allocation method comprising:
acquiring a sector density of a sector to be used by a virtual base station;
determining a virtualized resource allocation model, based on the acquired sector density; and
allocating a virtualized resource for the virtual base station, based on the determined virtualized resource allocation model.

15. The virtualized resource allocation method according to Claim 14, further comprising measuring a latency of an implementation platform for implementing the virtual base station,
wherein the determination includes determining the virtualized resource allocation model, based on the measured latency.

16. A non-transitory computer-readable medium storing a program for causing a computer to execute processing of:
acquiring a sector density of a sector to be used by a virtual base station;
determining a virtualized resource allocation model, based on the acquired sector density, and
allocating a virtualized resource for the virtual base station, based on the determined virtualized resource allocation model.

17. The non-transitory computer-readable medium according to Claim 16, further comprising measuring a latency of an implementation platform for implementing the virtual base station,
wherein the determination includes determining the virtualized resource allocation model, based on the measured latency.
